# EUROPEAN PATENT SPECIFICATION

(11) **EP 2 045 311 B1**
(45) Date of publication and mention of the grant of the patent: **20.03.2013**
(21) Application number: 07425612.4
(22) Date of filing: 02.10.2007
(51) Int. Cl.: C10J 3/32, C10J 3/66, C10J 3/14, C10J 3/80, C10B 53/02, C10B 51/00

(54) **System and process for the pyrolsation and gasification of organic substances**
System und Verfahren zur Pyrolisierung und Vergasung von organischen Substanzen
Système et procédé pour la pyrolyse et la gazéification de substances organiques

(43) Date of publication of application: 08.04.2009
(73) Proprietor: IN.SER. S.p.A., 10146 Torino (IT)
(72) Inventor: Faussone, Gian Claudio Paolo c/o IN.SER. S.p.A., 10146 Torino (IT)
(74) Representative: Garavelli, Paolo

(56) References cited:
- US-A- 3 993 458
- US-A- 4 069 024
- US-A- 4 415 339
- US-A1- 2003 008 928
- US-A1- 2007 131 909
- US-B1- 6 510 695

## Description

The present invention refers to a system and a process for the pyrolysation and gasification of organic substances, such as in particular biomasses.

As known, pyrolysers are reactors adapted to perform the pyrolysis process: pyrolysis is a process for the thermo-chemical decomposition of organic substances, such as for example biomasses, obtained by applying heat, and with a complete absence of an oxidising agent, normally oxygen, to perform a thermally induced homolysis: under such conditions, the organic substance is subjected to scission of originary chemical links, forming simpler molecules.

It is also known that gassing devices exploit the same pyrolysis reaction through heating at the presence, however, of reduced amounts of oxygen: under these conditions, the organic substances are completely destroyed, dividing their molecules, generally long carbon chains, into simpler molecules of carbon monoxide, hydrogen and natural gas, that form a synthesis gas (syngas), mostly composed of natural gas and carbon dioxide, and sometimes pure enough to be used as such. Different from pyrolysers, which strictly perform the pyrolysis, namely with a complete lack of oxygen, the gassing devices, operating instead with small amounts of such element, also produce a partial oxidation. Currently, if organic substances are composed of biomasses, energy captured through the photosynthesis in such substances is freed, either by burning the syngas in a burner to exploit its heat or supply a steam turbine, or by using it as fuel for explosion engines, or obtaining hydrogen therefrom to be then used as fuel cells to produce electricity.

In a more and more growing context of searches for new alternative sources of energy production and waste disposal, the use of pyrolysers or gassing devices for thermo-valorising biomasses and wastes like agricultural and agro-industrial residuals, agricultural and forest virgin biomasses, forest and forest-cultivating residuals, wood and paper working residuals, allows obtaining great advantages, such as a reduced environmental impact both as regards production and as regards transport of produced syngas and good opportunities to re-use the resulting heat.

The prior art, however, does not propose solutions that provide for a combined, synergic and integrated use of at least one pyrolyser and at least one gassing device in a single integrated system, in such a way as to best optimise the operation through suitable thermal and energy cooperations. From the prior art, some systems are known, such as those disclosed in patents n. WO2007077685, US7214252, WO2007045291, NZ542062, US2007012229, KR940002987, KR20020093711, KR20020048344, CN2811769Y, that however are still very far from obtaining high efficiencies, since they do not provide for an actually synergic and optimised cooperation between their various components, in particular for pyrolysation and gasification.

US 4 069 024 shows a combined pyrolysis and gasification reactor and method, incorporating as well a charge dryer making full use of the heat energy of gaseous product streams. Char is transported from the pyrolysis reactor to the gasification reactor by means of a worm screw.

Therefore, object of the present invention is solving the above prior art problems, by providing a system and a process for the pyrolysation and gasification of organic substances, such as in particular biomasses, that allow a synergic operation between at least one pyrolysation reactor and at least one gassing device in a single integrated system, allowing to obtain higher efficiencies than those of prior art systems.

The above and other objects and advantages of the invention, as will appear from the following description, are obtained with a system for the pyrolysation and gasification of organic substances as described in claim 1.

Moreover, the above and other objects and advantages of the invention are obtained with a process for the pyrolysation of organic substances as described in claim 14.

Preferred embodiments and non-trivial variations of the present invention are the subject matter of the dependent claims.

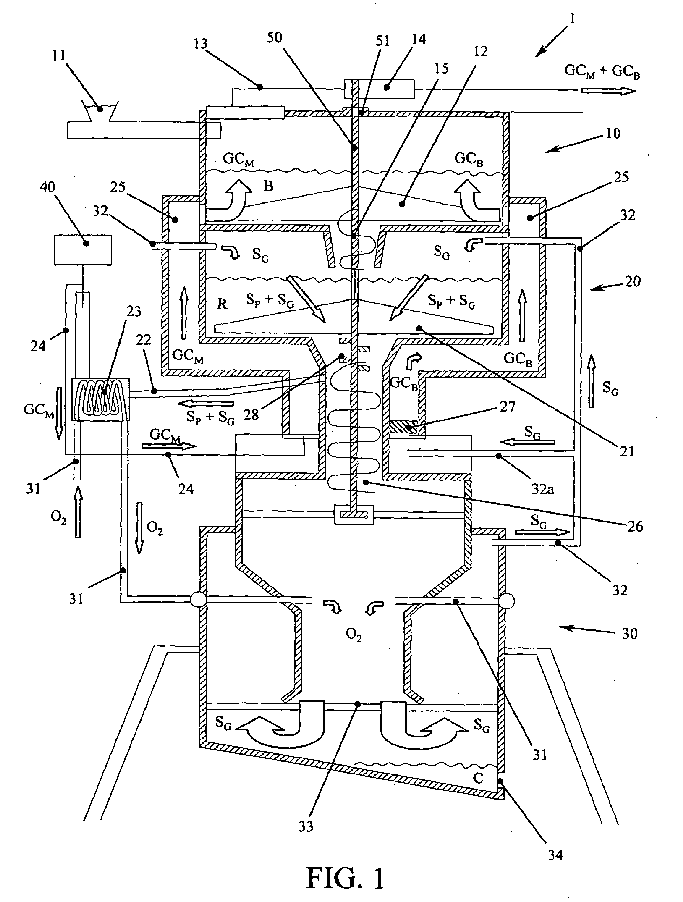

The present invention will be better described by some preferred embodiments thereof, provided as a non-limiting example, with reference to the enclosed drawings, in which the only FIG. 1 shows a side sectional view of a preferred embodiment of the system for the pyrolysation and gasification of organic substances according to the present invention.

With reference then to FIG. 1, it is possible to note that the system 1 for the pyrolysation and gasification of organic substances, in particular biomasses, according to the present invention comprises in cascade, preferably with a vertically developing arrangement, at least one evaporation module 10, at least one pyrolysis reactor 20 and at least one gassing device 30, in which the evaporation module 10 is supplied with the organic substance B, for example through at least one loading hopper 11, in which this latter one is dried before being transferred through first supplying means 15 in the pyrolysis reactor 20 to be subjected to a pyrolysis process for producing at least one pyrolysis fuel syngas S_{P} and remaining organic products R with an energy content, these latter ones being then transferred through second supplying means 26 to the gassing device 30 to produce at least one gasification fuel syngas S_{G}, further comprising first channelling means of the pyrolysis fuel syngas S_{P} and the gasification fuel syngas S_{G} from the pyrolysis reactor 20 towards at least one energy user 40, second channelling means of burnt exhaust gases GC_{M} produced by the energy user 40 towards the evaporation module 10, and third channelling means of the gasification fuel syngas S_{G} from the gassing device 30 to the pyrolysis module 20.

The gassing device 30 is further, obviously, supplied with oxygen O₂ from fourth channelling means.

Possibly, the system 1 can further comprise at least fifth channelling means of the gasification fuel syngas S_{G} from the gassing device 30 towards at least one burner 27, whose burnt exhaust gases GC_{B} are channelled towards the evaporation module 10, possibly by interposing at least one interspace 25 of the pyrolysis reactor 20.

In particular, the pyrolysis reactor 20 is preferably a rotary mixer pyrolyser 21, composed of a cylinder made of refractory steel insulated by means of a liner composed of insulating material; inside the pyrolysis reactor 20, biomass B, coming from the evaporation module 10 through the first supplying means 15, is degraded at high temperature and without oxygen, producing the pyrolysis fuel syngas S_{P} and the remaining organic products R, mainly composed of a fuel solid (char) whose energy characteristics are similar to lignite, and an oily-tarry residual (tar), also with an interesting energy content. The pyrolysis syngas S_{P} and the gasification syngas S_{G}, present inside the pyrolysis reactor 20 for the reasons stated below, are then taken from the pyrolysis reactor 20 through the first channelling means realised as at least one first duct 22 to supply, by interposing at least one air/air heat exchanger 23 mentioned below, the energy user 40 such as, for example, a generator set, with gas turbine or alternate motor, for producing electric energy. Burnt exhaust gases GC_{M} produced by the energy user 40 are then channelled through the second channelling means realised as at least one second duct 24 to be re-inserted inside the evaporation module 10, possibly by interposing at least one interspace 25 of the pyrolysis reactor 20, in order to pass upwards through the biomass B present inside and perform its drying.

The gassing device 30, placed downstream of the pyrolysis reactor 20, is supplied with the remaining organic products R coming from the pyrolysis reactor 20 itself through the second supplying means and with oxygen O₂ through the fourth channelling means, realised as at least one fourth duct 31, by interposing the air/air heat exchanger 23 to produce the gasification syngas S_{G} through a gasification reaction; in particular, oxygen O₂ is heated in the air/air heat exchanger 23 by the pyrolysis syngas S_{P} and the gasification syngas S_{G} coming from the pyrolysis reactor 20 obtaining the double purpose of providing heat to the gassing device 30 necessary for the gasification reaction through heated oxygen O₂ and cool the pyrolysis syngas S_{P} and the gasification syngas S_{G}, consequently recovering calories, before inserting them in the energy user 40 in which the presence of excessively hot gases would be a useless waste of thermal energy.

The gasification syngas S_{G} is therefore taken from the gassing device 30 through the third channelling means realised as at least one third duct 32 to be re-inserted at high temperature inside the pyrolysis reactor 20 in order to provide heat and support the pyrolysis process. Through the fifth channelling means, preferably realised as at least one by-pass duct 32a of the third duct 32, the gasification syngas S_{G} is further channelled towards the burner 27 and the burnt exhaust gases GC_{B} are re-inserted in the evaporation module 10, possibly through the interspace 25 of the pyrolysis reactor 20, in order to integrate the burnt exhaust gases GC_{M} to pass upwards through the biomass B present inside and perform its drying.

On the lower part, the gassing device 30 can be equipped with at least one grid 33 that performs the triple function of allowing the re-circulation of oxygen O₂ heated inside, making the gasification reaction more efficient and uniform, the passage of the gasification syngas S_{G} towards the third duct 32 and the exit of ashes C produced by the gasification process in order to be then removed through at least one discharge opening 34.

Between the pyrolysis reactor 20 and the gassing device 30, upstream of the second supplying means, it is further possible to provide at least one area equipped with filtering means 28 of the remaining organic products R before inserting them inside the gassing device 30 itself.

In order to allow a more efficient extraction of the burnt exhaust gases GC_{B} e GC_{M} and the evaporation vapours of the biomass B contained inside the evaporation module 10, this latter one is equipped on its upper part with at least one fume exhaust duct 13, possibly cooperating with at least one exhauster or extractor 14.

The first and second supplying means, respectively 15 and 26, are preferably realised as sealed worm screws. In a more simplified embodiment thereof, their rotation could be controlled by a single drive shaft 50 coaxial therewith actuated by at least one engine 51, that possibly rotates also the rotary mixer 21 of the pyrolysis reactor 20 and/or possibly a mixer 12 of the evaporation module 10. Since however the times for supplying the biomass B from the evaporation module 10 to the pyrolysis reactor 20 can be substantially different from the times for supplying the remaining organic products R from the pyrolysis reactor 20 to the gassing device 30, it is clear that a rotation at the same angular speed of the first and second supplying means would be counterproductive for an operation of the system 1 according to the present invention that allows obtaining the best possible efficiency. For such reason, in an alternative embodiment thereof (not shown), the first and second supplying means are rotatingly driven by at least two different rotation shafts that, however, due to reasons of space reduction, and building and operating symmetry of the system 1, appear as rotation shafts one as liner of the other with the same rotation axes: in this way, it is possible to allow a rotation of the first and second supplying means with different angular speeds, depending on the actual supply needs of the various components of the system 1 according to the present invention.

The present invention further refers to a process for the pyrolysation and gasification according to claim 14.

## Claims

1. System (1) for a pyrolysation and gasification of organic substances, in particular biomasses (B), comprising in cascade at least one evaporation module (10), at least one pyrolysis reactor (20) adapted to produce at least one pyrolysis fuel syngas (S_{P}) and remaining organic products (R), at least one gassing device (30) adapted to produce at least one gasification fuel syngas (S_{G}), first supplying means (15) adapted to supply said organic substance dried by said evaporation module (10) to said pyrolysis reactor (20) , second supplying means (26) adapted to supply said remaining organic products (R) to said gassing device (30), first channelling means of said pyrolysis fuel syngas (S_{P}) and of said gasification fuel syngas (S_{G}) from said pyrolysis reactor (20) to at least one energy user (40), second channelling means of burnt exhaust gases (GC_{M}) produced by said energy user (40) towards said evaporation module (10), and third channelling means of said gasification fuel syngas (S_{G}) from said gassing device (30) to said pyrolysis module (20), **characterised in that** said first and second supplying means (15, 26) are sealed worm screws connected to a drive shaft (50) coaxial therewith actuated in rotation by at least one engine (51).

2. System (1) according to claim 1, **characterised in that** it further comprises at least fifth channelling means of said gasification fuel syngas (S_{G}) from said gassing device (30) to at least one burner (27), burnt exhaust gases (GC_{B}) of said burner (27) being channelled towards said evaporation module (10).

3. System (1) according to claim 2, **characterised in that** said burnt exhaust gases (GC_{B}) of said burner (27) are channelled towards said evaporation module (10) by interposing at least one interspace (25) of said pyrolysis reactor (20).

4. System (1) according to claim 1, **characterised in that** said evaporation module (10) is supplied with said organic substance through at least one loading hopper (11).

5. System (1) according to claim 1, **characterised in that** said pyrolysis reactor (20) is a rotary mixer pyrolyser (21).

6. System (1) according to claim 1, **characterised in that** said first channelling means are at least one first duct (22) equipped with at least one air/air heat exchanger (23).

7. System (1) according to claim 3, **characterised in that** said burnt exhaust gases (GC_{M}) of said energy user (40) are channelled towards said evaporation module (10) by interposing said interspace (25).

8. System (1) according to claim 6, **characterised in that** said gassing device (30) is supplied with oxygen (O₂) through fourth channelling means and heated through said pyrolysis syngas (S_{P}) and gasification syngas (S_{G}) in said air/air heat exchanger (23).

9. System (1) according to any one of the previous claims, **characterised in that** on its lower part said gassing device (30) is equipped with at least one grid (33).

10. System (1) according to claim 1, **characterised in that** between said pyrolysis reactor (20) and said gassing device (30), upstream of said second supplying means, filtering means (28) are arranged for said remaining organic products (R) before inserting them inside said gassing device (30).

11. System (1) according to any one of the previous claims, **characterised in that** on its upper side said evaporation module (10) is equipped with at least one exhaust duct (13) of said burnt exhaust gases (GC_{B}, GC_{M}) and of vapours of said organic substance.

12. System (1) according to claim 11, **characterised in that** said exhaust duct (13) is equipped with at least one exhauster or extractor (14) of said gases ad vapours.

13. System (1) according to claim 1, **characterised in that** said drive shaft (50) rotates said rotary mixer (21) and/or a mixer (12) of said evaporation module (10).

14. Process for a pyrolysation and gasification of organic substances, such as in particular biomasses (B), by means of a system (1) according to any one of the previous claims, **characterised in that** it comprises the steps of:
a) inserting said biomass (B) inside said evaporation module (10);
b) drying said biomass (B) through said burnt exhaust gases (GC_{M}) produced by said energy unit (40) and said burnt exhaust gases (GC_{B}) produced by said burner (27);
c) transferring said biomass (B) from said evaporation module (10) to said pyrolysis reactor (20) through said first supplying means;
d) inserting said gasification syngas (S_{G}) from said gassing device (30) into said pyrolysis reactor (20);
e) performing a pyrolysis reaction of said biomass (B) inside said pyrolysis reactor (20) to generate said pyrolysis syngas (S_{P});
f) transferring said remaining organic products (R) of said pyrolysis reaction from said pyrolysis reactor (20) to said gassing device (30) through said second supplying means;
g) transferring said pyrolysis syngas (S_{P}) and said gasification syngas (S_{G}) from said pyrolysis reactor (20) to said energy user (40) passing through said air/air heat exchanger (23);
h) transferring said burnt exhaust gases (GC_{M}) from said energy unit (40) to said evaporation module (10);
i) supplying said gassing device (30) with oxygen (O₂) passing through said air/air heat exchanger (23);
j) performing a gasification reaction of said remaining organic products (R) inside said gassing device (30) to generate said gasification syngas (S_{G});
k) transferring said gasification syngas (S_{G}) from said gassing device (30) to said pyrolysis reactor (20);
l) transferring said gasification syngas (S_{G}) from said gassing device (30) to said burner (27);
m) transferring said burnt exhaust gases (GC_{B}) from said burner (27) to said evaporation module (10); and
n) cyclically repeating steps a) to m).

## Patentansprüche

1. Pyrolysierungs- und Vergasungssystem (1) von organischen Substanzen, insbesondere Biomassen (B), das nacheinander mindestens ein Verdampfungsmodul (10) und mindestens einen Pyrolysereaktor (20) enthält, der dazu dient, mindestens ein Brenngas wie Syngas aus der Pyrolyse (Sp) und organische Rückstände (R) zu erzeugen, mindestens einen Vergaser (30), der dazu dient, mindestens ein Brenngas wie Syngas aus der Vergasung (S_{G}) zu erzeugen, erste Zuführvorrichtungen (15), die dazu dienen, die genannte getrocknete organische Substanz aus dem Verdampfungsmodul (10) an den genannten Pyrolysereaktor (20) zu übertragen, zweite Zuführvorrichtungen (26), die dazu dienen, die genannten organischen Rückstände (R) an den genannten Vergaser (30) zu übertragen, erste Kanalisierungsvorrichtungen des genannten Brenngases wie Syngas aus der Pyrolyse (Sp) und des genannten Brenngases wie Syngas aus der Vergasung (S_{G}) für die Übertragung aus dem genannten Pyrolysereaktor (20) an mindestens einen Energieverbraucher (40), zweite Kanalisierungsvorrichtungen der Rauchgase (GC_{M}), die vom genannten Energieverbraucher (40) in Richtung des genannten Verdampfungsmoduls (10) erzeugt werden, und dritte Kanalisierungsvorrichtungen des genannten Brenngases wie Syngas aus der Vergasung (S_{G}) für die Übertragung aus dem genannten Vergaser (30) an das genannte Pyrolysemodul (20), und ist **dadurch gekennzeichnet, dass** die genannten ersten und zweiten Zuführvorrichtungen (15, 26) Dichtschnecken sind, die mit einer Antriebswelle(50) verbunden sind, die koaxial zu ihnen angeordnet ist, und in Rotation von mindestens einem Motor (51) angetrieben wird.

2. System (1) gemäß Patentanspruch 1, das **dadurch gekennzeichnet** ist, mindestens fünfte Kanalisierungsvorrichtungen des genannten Brenngases wie Syngas aus der Vergasung (S_{G}) für die Übertragung aus dem genannten Vergaser (30) an mindestens einen Brenner (27) zu enthalten, Rauchgase (GC_{B}) des genannten Brenners (27) werden in Richtung des genannten Verdampfungsmoduls (10) kanalisiert.

3. System (1) gemäß Patentanspruch 2, das **dadurch gekennzeichnet ist, dass** die genannten Rauchgase (GC_{B}) des genannten Brenners (27) durch Anbringen von mindestens einem Zwischenraum (25) in Richtung des genannten Verdampfungsmoduls (10) des genannten Pyrolysereaktors (20) kanalisiert werden.

4. System (1) gemäß Patentanspruch 1, das **dadurch gekennzeichnet ist, dass** das genannte Verdampfungsmodul (10) mit der genannten organischen Substanz durch mindestens einen Einfülltrichter (11) versorgt wird.

5. System (1) gemäß Patentanspruch 1, das **dadurch gekennzeichnet ist, dass** der genannte Pyrolysereaktor (20) ein Pyrolysator mit Drehtrommel (21) ist.

6. System (1) gemäß Patentanspruch 1, das **dadurch gekennzeichnet ist, dass** die genannten ersten Kanalisierungsvorrichtungen mindestens eine erste Leitung (22) sind, die mit mindestens einem Luft-/Luft-Wärmetauscher (23) ausgestattet ist.

7. System (1) gemäß Patentanspruch 3, das **dadurch gekennzeichnet ist, dass** die genannten Rauchgase (GC_{M}) des genannten Energieverbrauchers (40) durch Anbringen von mindestens einem Zwischenraum (25) in Richtung des genannten Verdampfungsmoduls (10) kanalisiert werden.

8. System (1) gemäß Patentanspruch 6, das **dadurch gekennzeichnet ist, dass** der genannte Vergaser (30) durch vierte Kanalisierungsvorrichtungen mit Sauerstoff (O₂) versorgt wird, und durch die genannten Syngase aus der Pyrolyse (Sp) und die Syngase aus der Vergasung (S_{G}) im genannten Luft-/Luft-Wämetauscher (23) erhitzt wird.

9. System (1) gemäß den vorhergehenden Patentansprüchen, das **dadurch gekennzeichnet ist, dass** der genannte Vergaser (30) unten mit mindestens einem Gitter (33) ausgestattet ist.

10. System (1) gemäß Patentanspruch 1, das **dadurch gekennzeichnet ist, dass** zwischen dem genannten Pyrolysereaktor (20) und dem genannten Vergaser (30) über den genannten zweiten Zuführvorrichtungen Filtervorrichtungen (28) der genannten organischen Rückstände (R) vor ihrer Einführung in den genannten Vergaser (30) angeordnet sind.

11. System (1) gemäß den vorhergehenden Patentansprüchen, das **dadurch gekennzeichnet ist, dass** das genannte Verdampfungsmodul (10) oben mit mindestens einer Abflussleitung (13) der genannten Rauchgase (GC_{B}, GC_{M}) und der Dämpfe der genannten organischen Substanz ausgestattet ist.

12. System (1) gemäß Patentanspruch 11, das **dadurch gekennzeichnet ist, dass** die genannte Abflussleitung (13) mit mindestens einem Sauger oder Extraktor (14) der genannten Gase und Dämpfe ausgestattet ist.

13. System (1) gemäß Patentanspruch 1, das **dadurch gekennzeichnet ist, dass** die genannte Antriebswelle (50) die genannte Drehtrommel (21) und/oder eine Trommel (12) des genannten Verdampfungsmoduls (10) in Rotation bringt.

14. Pyrolysierungs- und Vergasungsverfahren von organischen Substanzen, insbesondere Biomassen (B) durch ein System (1) gemäß einem beliebigen der vorhergehenden Patentansprüche, das **dadurch gekennzeichnet ist, dass** es folgende Phasen enthält:
a) Die genannte Biomasse (B) in das genannte Verdampfungsmodul (10) einführen;
b) Die genannte Biomasse (B) mit den genannten Rauchgasen (GC_{M}), die von der genannten Energieeinheit (40) erzeugt werden, und die genannten Rauchgase (GC_{B}), die vom genannten Brenner (27) erzeugt werden, trocknen;
c) Die genannte Biomasse (B) durch die genannten ersten Zuführvorrichtungen vom genannten Verdampfungsmodul (10) an den genannten Pyrolysereaktor (20) übertragen;
d) Das genannte Syngas aus der Vergasung (S_{G}) aus dem genannten Vergaser (30) in den genannten Pyrolysereaktor (20) einführen;
e) Eine Pyrolysereaktion der genannten Biomasse (B) im genannten Pyrolysereaktor (20) ausführen, um das genannte Syngas aus der Pyrolyse (Sp) zu erzeugen;
f) Die genannten organischen Rückstände (R) der genannten Pyrolysereaktion mit den genannten zweiten Zuführvorrichtungen aus dem genannten Pyrolysereaktor (20) an den genannten Vergaser (30) übertragen;
g) Das genannte Syngas aus der Pyrolyse (Sp) und das genannte Syngas aus der Vergasung (S_{G}) aus dem genannten Pyrolysereaktor (20) an den genannten Energieverbraucher (40) übertragen, es dabei durch den genannten Luft-/Luft-Wärmetauscher (23) führten;
h) Die genannten Rauchgase (GC_{M}) der genannten Energieeinheit (40) an das genannte Verdampfungsmodul (10) übertragen;
i) Den genannten Vergaser (30), der durch den Luft-/Luft-Wärmetauscher (23) läuft, mit Sauerstoff (O₂) versorgen;
j) Eine Vergasungsreaktion der genannten organischen Rückstände (R) im genannten Vergaser (30) ausführen, um das genannte Syngas aus der Vergasung (S_{G}) zu erzeugen;
k) Das genannte Syngas aus der Vergasung (S_{G}) aus dem genannten Vergaser (30) an den genannten Pyrolysereaktor (20) übertragen;
l) Das genannte Syngas aus der Vergasung (S_{G}) aus dem genannten Vergaser (30) an den genannten Brenner (27) übertragen;
m) Die genannten Rauchgase (GC_{B}) aus dem genannten Brenner (27) an das genannte Verdampfungsmodul (10) übertragen; und
n) Die Phasen von a) bis m) zyklisch wiederholen.

## Revendications

1. Système (1) de pyrolisation et gazéification de substances organiques, en particulier des biomasses (B), comprenant en cascade au moins un module d'évaporation (10), au moins un réacteur de pyrolyse (20) apte à produire au moins un gaz combustible gaz de synthèse de pyrolyse (Sp) et des produits organiques résidus (R), au moins un gazéificateur (30) apte à produire au moins un gaz combustible gaz de synthèse de gazéification (S_{G}), les premiers moyens d'alimentation (15) aptes à alimenter ladite substance organique sèche dudit module d'évaporation (10) au dit réacteur de pyrolyse (20), les seconds moyens d'alimentation (26) aptes à alimenter lesdits produits organiques résidus (R) au dit gazéificateur (30), des premiers moyens de canalisation dudit gaz combustible gaz de synthèse de pyrolyse (Sp) et dudit gaz combustible gaz de synthèse de gazéification (S_{G}) dudit réacteur de pyrolyse (20) à au moins un appareil énergétique (40), des seconds moyens de canalisation de gaz brûlés d'échappement (GC_{M}) produits par ledit appareil énergétique (40) vers ledit module d'évaporation (10), et des tiers moyens de canalisation dudit gaz combustible gaz de synthèse de gazéification (S_{G}) dudit gazéificateur (30) au dit module de pyrolyse (20), **caractérisé par le fait que** des dits premiers et seconds moyens d'alimentation (15, 26) sont des vis sans fin à tenue raccordées à un arbre moteur (50) coaxiales actionné en rotation par au moins un moteur (51).

2. Système (1) selon la revendication 1, **caractérisé par** le fait de comprendre au moins des cinquièmes moyens de canalisation dudit gaz combustible gaz de synthèse de gazéification (S_{G}) dudit gazéificateur (30) à au moins un brûleur (27), des gaz brûlés d'échappement (GC_{B}) dudit brûleur (27) étant canalisés vers ledit module d'évaporation (10).

3. Système (1) selon la revendication 2, **caractérisé par le fait que** lesdits gaz brûlés d'échappement (GC_{B}) dudit brûleur (27) sont canalisés vers ledit module d'évaporation (10) au moyen de l'interposition d'au moins un interstice (25) dudit réacteur de pyrolyse (20).

4. Système (1) selon la revendication 1, **caractérisé par le fait que** ledit module d'évaporation (10) est alimenté avec ladite substance organique au moyen d'au moins une trémie de chargement (11).

5. Système (1) selon la revendication 1, **caractérisé par le fait que** ledit réacteur de pyrolyse (20) est un pyrolyseur mélangeur tournant (21).

6. Système (1) selon la revendication 1, **caractérisé par le fait que** lesdits premiers moyens de canalisation sont au moins une première conduite (22) dotée d'au moins un échangeur de chaleur air/air (23).

7. Système (1) selon la revendication 3, **caractérisé par le fait que** lesdits gaz brûlés d'échappement (GC_{M}) dudit appareil énergétique (40) sont canalisés vers ledit module d'évaporation (10) au moyen de l'interposition dudit interstice (25).

8. Système (1) selon la revendication 6, **caractérisé par le fait que** ledit gazéificateur (30) est alimenté avec oxygène (O₂) au moyen de quatrièmes moyens de canalisation et réchauffé au moyen des dits gaz de synthèse de pyrolyse (Sp) et gaz de synthèse de gazéification (S_{G}) dans ledit échangeur de chaleur aria/aria (23).

9. Système (1) selon les revendications précédentes, **caractérisé par le fait qu'**inférieurement ledit gazéificateur (30) est doté d'au moins une grille (33).

10. Système (1) selon la revendication 1, **caractérisé par le fait qu'**entre ledit réacteur de pyrolyse (20) et ledit gazéificateur (30), en amont desdits seconds moyens de alimentation sont disposés des moyens de filtrage (28) de dits produits organiques résidus (R) avant leur introduction à l'intérieur dudit gazéificateur (30).

11. Système (1) selon les revendications précédentes, **caractérisé par le fait que** supérieurement ledit module d'évaporation (10) est doté d'au moins une conduite d'échappement (13) des dits gaz brûlés d'échappement (GC_{B}, GC_{M}) et des vapeurs de ladite substance organique.

12. Système (1) selon la revendication 11, **caractérisé par le fait que** ladite conduite d'échappement (13) est dotée d'au moins un aspirateur ou extracteur (14) des dits gaz et vapeurs.

13. Système (1) selon la revendication 1, **caractérisé par le fait que** ledit arbre moteur (50) met en rotation ledit mélangeur tournant (21) et/ou un mélangeur (12) dudit module d'évaporation (10).

14. Procédé de pyrolysation et gazéification de substances organiques, tels que en particulier biomasses (B), au moyen de un système (1) selon une quelconque des revendications précédentes, **caractérisé par** le fait de comprendre les phases de:
a) introduire ladite biomasse (B) à l'intérieur dudit module d'évaporation (10);
b) sécher ladite biomasse (B) au moyen de dits gaz brûlés d'échappement (GC_{M}) produits de ladite unité énergétique (40) et dits gaz brûlés d'échappement (GC_{B}) produits dudit brûleur (27);
c) transférer ladite biomasse (B) dudit module d'évaporation (10) audit réacteur de pyrolyse (20) au moyen des dits premiers moyens d'alimentation;
d) introduire dans ledit réacteur de pyrolyse (20) ledit gaz de synthèse de gazéification (S_{G}) dudit gazéificateur (30);
e) effectuer une réaction de pyrolyse de ladite biomasse (B) à l'intérieur dudit réacteur de pyrolyse (20) pour générer ledit gaz de synthèse de pyrolyse (Sp);
f) transférer dits produits organiques résidus (R) de ladite réaction de pyrolyse dudit réacteur de pyrolyse (20) audit gazéificateur (30) au moyen de dits seconds moyens d'alimentation;
g) transférer ledit gaz de synthèse de pyrolyse (Sp) et ledit gaz de synthèse de gazéification (S_{G}) dudit réacteur de pyrolyse (20) audit appareil énergétique (40) en passant à travers ledit échangeur de chaleur air/air (23);
h) transférer lesdits gaz brûlés d'échappement (GC_{M}) de ladite unité énergétique (40) audit module d'évaporation (10);
i) fournir ledit gazéificateur (30) d'oxygène (O₂) en passant à travers ledit échangeur de chaleur air/air (23);
j) effectuer une réaction de gazéification desdits produits organiques résidus (R) à l'intérieur dudit gazéificateur (30) pour générer ledit gaz de synthèse de gazéification (S_{G});
k) transférer ledit gaz de synthèse de gazéification (S_{G}) dudit gazéificateur (30) audit réacteur de pyrolyse (20);
l) transférer ledit gaz de synthèse de gazéification (S_{G}) dudit gazéificateur (30) audit brûleur (27);
m) transférer les dits gaz brûlés d'échappement (GC_{B}) dudit brûleur (27) audit module d'évaporation (10); et
n) répéter cycliquement les phases de a) à m).
